# EUROPEAN PATENT APPLICATION

(11) **EP 3 971 566 A1**
(43) Date of publication of application: **23.03.2022**
(21) Application number: 21162060.4
(22) Date of filing: 11.03.2021
(51) Int. Cl.: G01N 29/04, G01N 29/24, G01N 29/28, G01N 29/32, B06B 1/00

(54) **ULTRASONIC PROBE AND ULTRASONIC INSPECTION DEVICE**

(30) Priority: 17.09.2020 JP 2020156545
(71) Applicant: KABUSHIKI KAISHA TOSHIBA, Minato-ku Tokyo 105-8001 (JP)
(72) Inventor: KOBAYASHI, Tsuyoshi, Minato-ku, Tokyo, 105-8001 (JP)
(74) Representative: Cabinet Beau de Loménie

(57) **Abstract**

An ultrasonic probe (5) of an arrangement includes: a curved-surface oscillator (2) having a curved first surface (2a) which transmits/receives an ultrasonic wave and a curved second surface (2b) positioned on a side opposite to the first surface; a backing material (3) having a curved third surface; and a joining layer (4) intervened between the second surface of the curved-surface oscillator and the third surface of the backing material so as to join the curved-surface oscillator and the backing material. The joining layer has a shape in which a first thickness T1 in an end part of the curved-surface oscillator is larger than a second thickness T2 in a center part of the curved-surface oscillator.

## Description

### FIELD

Arrangements described herein relate generally to an ultrasonic probe and an ultrasonic inspection device.

### BACKGROUND

Ultrasonic inspection devices are used for medical diagnosis and non-destructive inspection of various members, devices, and so on. An ultrasonic inspection device includes, for example: an ultrasonic probe (transducer) which irradiates an ultrasonic wave on an inspection target portion and receives a reflected wave from the inspection target portion; and a control part or a display part which performs inspection processing of a state of the inspection target portion based on the reflected wave received by the ultrasonic probe. An ultrasonic probe is typically a device which includes electrodes disposed on both surfaces of an oscillator made of a piezoelectric material and oscillates an ultrasonic wave by applying a voltage (electric field) to the oscillator from the two electrodes. When a larger region is desired to be inspected by the ultrasonic probe, the ultrasonic waves oscillated from the ultrasonic probe are required to diverge in a comparatively large range. In such a case, it is typical to curve an oscillating/receiving surface of the oscillator and to curve an oscillator attachment surface of a backing plate which is provided to attenuate the ultrasonic wave emitted from a surface opposite to the oscillating/receiving surface of the oscillator.

When an oscillator (hereinafter, also referred to as a curved-surface oscillator) having a curved oscillating/receiving surface is used, a backing plate with a curvature the same as that of the curved-surface oscillator is typically joined to a rear surface of the curved-surface oscillator via a joining layer in a manner that the entire curved-surface oscillator is covered by the backing plate. In an ultrasonic probe having the curved-surface oscillator, there is a problem that, by its shape effect or the like, a joining stress of the joining layer concentrates on a side surface to cause cracking or the like, or overflow of a joining material such as solder or a brazing material to the side surface is induced to cause a short circuit or the like. In the ultrasonic probe, an additional ultrasonic wave is generated typically from an end part of the oscillator at an angle of almost 45 degrees in relation to a front direction (normal direction) of the oscillator, that is, what is called a side lobe is generated. This causes a problem of frequent occurrence of a ghost image in an inspection image by the ultrasonic wave.

### SUMMARY

A subject to be solved by aspects of the invention is to provide an ultrasonic probe and an ultrasonic inspection device which enables a decrease in cracking due to stress concentration on a side surface of a joining layer and a short circuit due to overflow of a joining material to the side surface in a curved-surface oscillator.

According to the aspects of the present invention, there is provided an ultrasonic probe and an ultrasonic inspection device which enables a decrease in cracking due to stress concentration on a side surface of a joining layer and a short circuit due to overflow of a joining material to the side surface in a curved-surface oscillator according to claim 1 and other dependent claims hereof.

### BRIEF DESCRIPTION OF THE DRAWINGS

FIG. 1 is a view illustrating a first example of an ultrasonic inspection device of an arrangement.
FIG. 2 is a cross-sectional view illustrating a stacked constitution of an ultrasonic probe in the ultrasonic inspection device illustrated in FIG. 1.
FIG. 3 is a view illustrating a second example of the ultrasonic inspection device of the arrangement.
FIG. 4 is a view illustrating a third example of the ultrasonic inspection device of the arrangement.
FIG. 5 is a view illustrating a fourth example of the ultrasonic inspection device of the arrangement.

### DETAILED DESCRIPTION

An ultrasonic probe of an arrangement includes: a curved-surface oscillator having a curved first surface which transmits/receives an ultrasonic wave and a curved second surface positioned on a side opposite to the first surface; a backing material having a curved third surface; and a joining layer intervened between the second surface of the curved-surface oscillator and the third surface of the backing material so as to join the curved-surface oscillator and the backing material. In the ultrasonic probe of the arrangement, the joining layer has a shape in which a first thickness in a normal direction of the third surface in an end part of the curved-surface oscillator is larger than a second thickness in the normal direction of the third surface in a center part of the curved-surface oscillator.

An ultrasonic probe and an ultrasonic inspection device of arrangements will be hereinafter described with reference to the drawings. Note that, in respective arrangements, substantially the same constituent parts are denoted by the same reference signs and description thereof may be partially omitted. The drawings are schematic, and a relation of thickness and planar dimension of each part, a thickness ratio among parts, and so on may be different from actual ones. Terms indicating upward and downward directions in the description may differ from actual directions based on a gravitational acceleration direction.

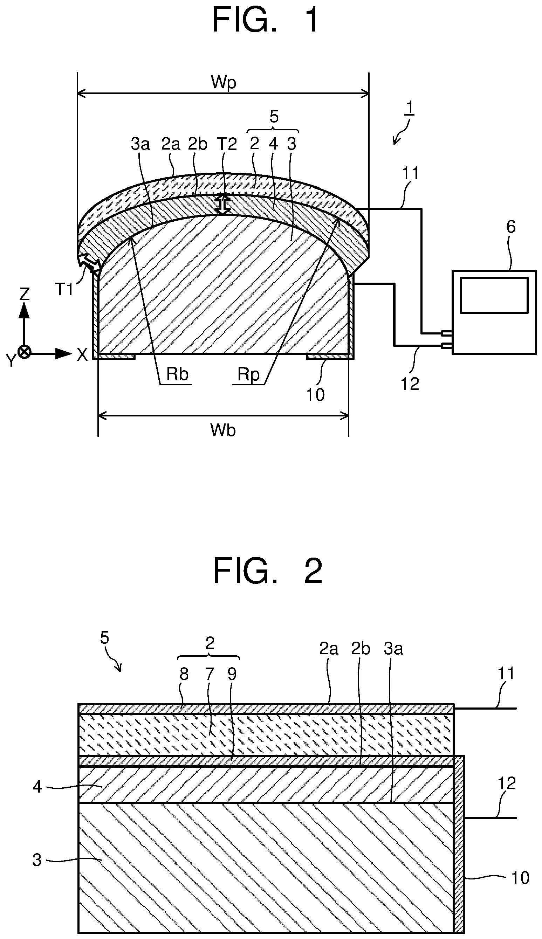

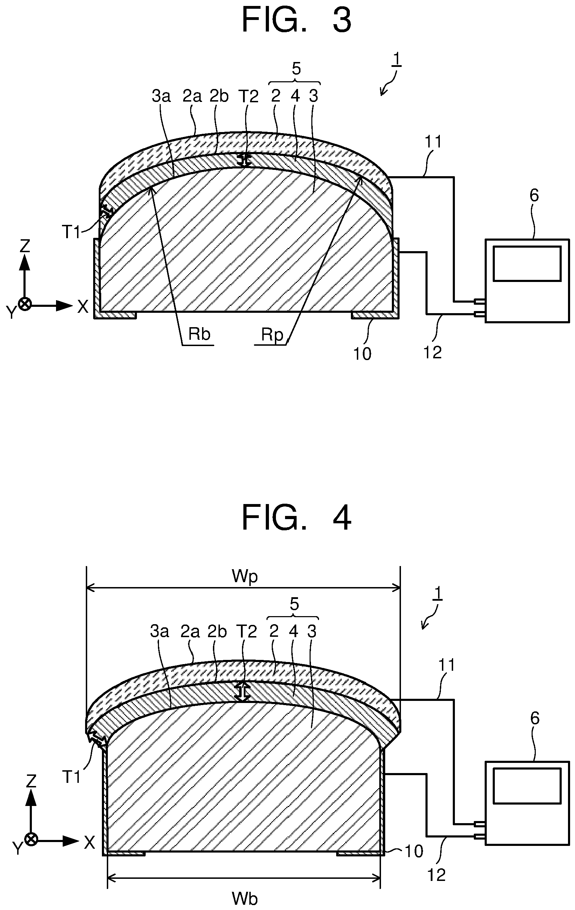

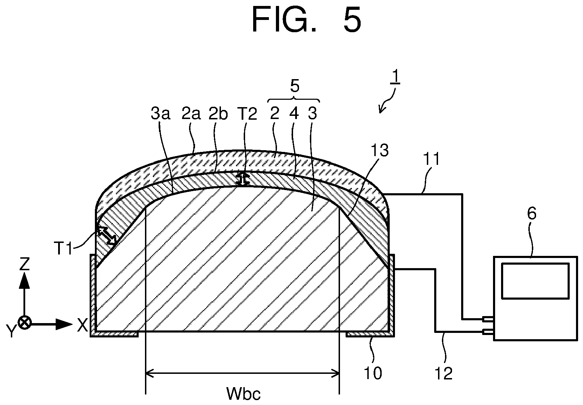

FIG. 1, FIG. 3, FIG. 4, and FIG. 5 are views illustrating the ultrasonic probes and the ultrasonic inspection devices of the arrangements. FIG. 1 illustrates a first example of the ultrasonic probe of the arrangement, FIG. 3 illustrates a second example of the ultrasonic probe of the arrangement, FIG. 4 illustrates a third example of the ultrasonic probe of the arrangement, and FIG. 5 illustrates a fourth example of the ultrasonic probe of the arrangement. FIG. 2 is a cross-sectional view illustrating a stacked constitution of the ultrasonic probe of the arrangements. In each of FIG. 1, FIG. 3, FIG. 4, and FIG. 5, a reference oscillation direction (oscillation direction in a center part of an ultrasonic oscillator) of an ultrasonic wave of the ultrasonic probe is a z-direction, and two directions orthogonal to the z-direction are an x-direction and a y-direction. Here, the x-direction is referred to as an aperture direction of the ultrasonic oscillator.

An ultrasonic inspection device 1 illustrated in each view includes: an ultrasonic probe (ultrasonic transducer) 5 which has an ultrasonic oscillator (piezoelectric oscillator) 2, a backing material 3, and a joining layer 4; and a control unit 6 which has a driving part driving the ultrasonic probe 5, a control part (control circuit) controlling an operation of the driving part, and a signal processing part (signal processing circuit) processing a reflected wave signal of the ultrasonic wave. The control unit 6 may have a display part or the like displaying a state of an inspected object based on a processed signal of a reflected wave.

The ultrasonic oscillator 2 of the ultrasonic probe 5 is joined to the backing material 3 via the joining layer 4. The ultrasonic oscillator 2 has a first surface 2a being a transmitting/receiving surface of an ultrasonic wave and a second surface (rear surface) 2b on a side opposite thereto. The backing material 3 is provided for the purpose of attenuating the ultrasonic wave emitted from the ultrasonic oscillator 2 to the second surface (rear surface) 2b and dumping residual vibration by pulse driving of the ultrasonic oscillator 2 or a received wave, and for the backing material 3, ferrite rubber, a porous ceramic material, or the like is used. The ultrasonic oscillator 2, as illustrated in the view of the stacked configuration of FIG. 2, has a piezoelectric body 7 and first and second electrodes 8, 9 provided on both surfaces thereof. Note that each layer is linearly drawn in FIG. 2 for the sake of convenience, but actually some portions are necessarily curved.

For the piezoelectric body 7, for example, a piezoelectric material such as lead zirconate titanate (PZT), lead titanate (PT), bismuth titanate (BNT), or barium titanate is used. For the first and second electrodes 8, 9, for example, an element metal material such as gold, silver, copper, palladium, nickel, or chromium, or an alloy material containing such metal, or the like is used. The first and second electrodes 8, 9 each has a coated layer or a baked layer of those metal materials, a coated layer or a baked layer of a conductive paste in which metal material powder and glass powder are dispersed in an organic material, or a sputtered film of a metal material.

The second surface 2b of the ultrasonic oscillator 2 is joined to a third surface 3a being a surface of the backing material 3 via the joining layer 4. A third electrode 10 is provided on a side surface of the backing material 3. The third electrode 10 is electrically connected to the second electrode 9 via the joining layer 4. For the joining layer 4, an adhesive agent, solder, a brazing material or the like is used. As illustrated in FIG. 1 and so on, when the second electrode 9 is to be drawn via the joining layer 4 and the third electrode 10, a conductive joining material (metal joining material) such as solder or a brazing material is used for the joining layer 4.

The driving part included in the control unit 6 has a power supply such as a pulsar power supply which drives the ultrasonic oscillator 2 with a pulse wave, a rectangular wave, a burst wave or the like to oscillate the ultrasonic waves. When a voltage is applied from the power supply of the driving part to the first electrode 8 and the second electrode 9 of the ultrasonic oscillator 2, an electric field is applied to the ultrasonic oscillator 2 to generate displacement in the ultrasonic oscillator 2. Thereby, an ultrasonic wave is oscillated from the ultrasonic oscillator 2. The control unit 6 is electrically connected to the first electrode (for example, a negative side electrode) 8 of the ultrasonic oscillator 2 via a lead wire 11 and electrically connected to the second electrode (for example, a positive side electrode) 9 via the joining layer 4, the third electrode 10, and a lead wire 12.

The ultrasonic oscillator 2 is a curved-surface oscillator in which the first surface 2a and the second surface 2b being the transmitting/receiving surface of the ultrasonic wave are each made to be in curved states, in order to enable broad inspection of an inspected object such as the inside of a plant, for example. The third surface 3a of the backing material 3 joined to such a curved second surface 2b via the joining layer 4 is made to be in a curved state similarly to the ultrasonic oscillator 2. Curved surfaces constituting the first surface 2a, the second surface 2b, and the third surface 3a each have a shape projecting upward (projecting in the z-direction) (projecting curved surface). However, when widths of the ultrasonic oscillator 2 and the backing material 3 (width in the x-direction in FIG. 1/aperture of the oscillator) are set to be the same and the second surface 2b and the third surface 3a are the curved surfaces having the same curvature radius, a thickness of the joining layer becomes uniform. In such a case, a joining stress concentrates on an end part of the joining layer to cause cracking or the like, or overflow of solder or the like constituting the joining layer to a side surface is induced to easily cause a short circuit or the like. Further, since a dumping effect is not large even in the oscillator end part in relation to a center part, a side lobe occurs and S/N is decreased.

Thus, in the ultrasonic probe 5 of the arrangement, the joining layer 4 has a shape in which a first thickness in its end part is larger than a second thickness in a center part. The first thickness is a thickness (indicated by an arrow T1 in the drawing) in the end part (part equivalent to a lowest position in the z-direction of the second surface 2b) of the joining layer 4 in a normal direction of the third surface 3a, and is equivalent to a largest thickness of the joining layer 4. The second thickness is a thickness (indicated by an arrow T2 in the drawing) in the center part (part equivalent to a highest position in the z-direction of the second surface 2b) of the joining layer 4 in the normal direction of the third surface 3a, and is equivalent to a smallest thickness of the joining layer 4. Making the first thickness T1 of the joining layer 4 larger than the second thickness T2 can suppress cracking or the like due to residual distortion and can suppress a short circuit due to approaching of the conductive joining material such as solder overflowing from the joining surface to the other electrode 10 of the ultrasonic oscillator 2. Further, making the end part of the joining layer 4 thick can suppress oscillation of the ultrasonic probe 5 toward a side direction, that is, what is called a side lobe, by a dumping effect of the thick joining layer 4.

Examples of the constitution in which the first thickness of the end part of the joining layer 4 is made larger than the second thickness of the center part include: (1) making a curvature radius Rb of the third surface 3a of the backing material 3 smaller than a curvature radius Rp of the second surface 2b of the ultrasonic oscillator 2; (2) making a width Wb of the third surface 3a of the backing material 3 smaller than a width Wp of the second surface 2b of the ultrasonic oscillator 2; (3) providing a chamfered surface 13 in the end part of the backing material 3, and so on. In the constitution (1), the curvature radiuses Rb, Rp of the third surface 3a and the second surface 2b are curvature radiuses in a cross section in the aperture direction (x-direction) of the ultrasonic oscillator 2. Further, in the constitution (2), the widths Wb, Wp of the third surface 3a and the second surface 2b are widths in the first direction (x-direction) of a tangential direction in the center part of the third surface 3a. In the constitution (3), the chamfered surface 13 is a surface provided in the end part in the first direction (x-direction) of the third surface 3a of the backing material 3 by performing chamfering in a manner to cut out a part of the curved third surface 3a.

In the above-described constitution (1), by making the curvature radius Rb (unit: mm) of the third surface 3a of the backing material 3 smaller than the curvature radius Rp (unit: mm) of the second surface 2b of the ultrasonic oscillator 2, distances from the third surface 3a to the second surface 2b become larger on an end part side of the ultrasonic probe 5. Therefore, the first thickness of the end part of the joining layer 4 can be made larger than the second thickness of the center part. Regarding the curvature radius Rb of the third surface 3a and the curvature radius Rp of the second surface 2b, the curvature radius Rb preferably satisfies 0.95 ≤ Rp ≤ 0.98. When the curvature radius Rb exceeds 0.98 Rp, it may not be possible to obtain an effective thickness of the end part of the joining layer 4 based on a difference between the curvature radius Rb and the curvature radius Rp. When the curvature radius Rb is less than 0.95 Rp, the thickness of the end part of the joining layer 4 becomes excessively large and may cause an unstable shape of the joining layer 4.

In the above-described constitution (2), by making the width Wb (unit: mm) of the third surface 3a of the backing material 3 smaller than the width Wp (unit: mm) of the second surface 2b of the ultrasonic oscillator 2, the first thickness of the end part of the joining layer 4 can be made larger than the second thickness of the center part. Regarding the width Wb of the third surface 3a and the width Wp of the second surface 2b as above, the width Wb preferably satisfies 0.90 ≤ Wp ≤ 0.98. When the width Wb exceeds 0.98 Wp, it may not be possible to obtain an effective thickness of the end part of the joining layer 4 based on a difference between the width Wb and the width Wp. When the width Wb is less than 0.90 Wp, the thickness of the end part of the joining layer 4 becomes excessively large and may cause an unstable shape of the joining layer 4.

In the above-described constitution (3), the chamfering provided in the end part of the backing material 3 is preferably performed so that a width Wbc of the curved third surface 3a after chamfering of the backing material 3 may be within 90% of the width Wp of the second surface 2b. Further, the width Wbc (unit: mm) of the third surface 3a after the chamfering preferably satisfies 0.90 ≤ Wp ≤ 0.98. When the width Wbc exceeds 0.98 Wp, it may not be possible to obtain an effective thickness of the end part of the joining layer 4 based on a difference between the width Wbc and the width Wp. When the width Wbc is less than 0.90 Wp, the thickness of the end part of the joining layer 4 becomes excessively large and may cause an unstable shape of the joining layer 4.

FIG. 1 illustrates an ultrasonic probe 5 to which the constitution (1) and the constitution (2) are applied in combination. The ultrasonic probe 5 illustrated in FIG. 1 uses the backing material 3 whose third surface 3a has a curvature radius Rb smaller than a curvature radius Rp of the second surface 2b and has a width Wb smaller than a width Wp of a second surface 2b. FIG. 3 illustrates an ultrasonic probe 5 to which the constitution (1) is applied. The ultrasonic probe 5 illustrated in FIG. 3 uses a backing material 3 whose third surface 3a has a curvature radius Rb smaller than a curvature radius Rp of a second surface 2b. FIG. 4 illustrates an ultrasonic probe 5 to which the constitution (2) is applied. The ultrasonic probe 5 illustrated in FIG. 4 uses a backing material 3 whose third surface 3a has a width Wb smaller than a width Wp of the second surface 2b. FIG. 5 illustrates an ultrasonic probe 5 to which the constitution (3) is applied. The ultrasonic probe 5 illustrated in FIG. 5 uses a backing material 3 having a chamfered surface 13 in an end part.

In each constitution described above, the ultrasonic probe 5 has the joining layer 4 in which the first thickness of the end part is larger than the second thickness of the center part. Therefore, it is possible to suppress occurrence of cracking due to residual distortion of the joining layer 4, a short circuit due to overflow of a joining material from a joining surface, or the like. Further, it is possible to suppress a side lobe of the ultrasonic probe 5. Combination of the constitutions (1) to (3) is not limited to the combination of the constitution (1) and the constitution (2) illustrated in FIG. 1, but the constitution (3) may be combined with the constitution (1) or the constitution (2), or the constitutions (1) to (3) may be all combined.

### EXAMPLES

Next, examples and evaluation results thereof will be described.

### (Comparative Example 1)

For the purpose of wide-scale flaw detection of an ultrasonic probe, a curved-surface oscillator type ultrasonic probe was fabricated by using an oscillator having a curved surface of 30 R in order to broaden its viewing angle. In Comparative Example 1, a curved-surface oscillator with a curvature of 30 R, a width (length in curvature direction) of 30 mm, a depth of 2 mm, a thickness of 0.4 mm, and a frequency constant of 2000 Hzm is disposed in a manner to have the curvature of 30 R in a direction where its ultrasonic emission direction (viewing angle) is desired to be broadened. Silver-baked electrodes are formed on upper and lower surfaces of the curved-surface oscillator. Normally, in a back surface (side opposite to a surface emitting an ultrasonic wave) of an oscillator, a backing material suppressing residual vibration of the oscillator is joined by a joining material such as an adhesive agent, solder, or the like. Here, a backing material constituted by a compound sintered body of aluminum oxide, zirconium oxide, and magnesium oxide is joined under a vacuum atmosphere of 400□ in heat-treatment temperature by using high-temperature solder whose melting point is 295□.

Here, the curvature of the backing material was made to be the same as that of the curved-surface oscillator so as to form a thin and uniform joining layer. Thereby, a thickness of the solder joining layer between the curved-surface oscillator and the backing material was 20 µm almost evenly from a center part to an end part. The curved-surface oscillator which was used has a negative thermal expansion coefficient in a temperature range equal to or lower than its Curie temperature, and the backing material has a positive thermal expansion coefficient. Further, the solder of the joining material, which is metal, exhibits a thermal expansion coefficient higher than that of the backing material. Since those members with quite different thermal expansion coefficients were joined at a high temperature and then the temperature was brought back to a room temperature, a large residual stress occurred in the joining layer or each member due to heat aberration thereof. In this example, the residual stress was not overcome, and cracking occurred in a part of the curved-surface oscillator to induce a decrease in yield.

Further, in this example, the solder overflowing from a joining surface at a time of solder joining ran and approached the upper side electrode (negative electrode side) of the oscillator, and occurrence of a short circuit was recognized. In this example, a width of the backing material is the same as that of the oscillator, and the solder overflowing from the joining surface at a time of heat treatment ran to the negative electrode side of the oscillator upper surface which is positioned upper than the joining surface, resulting in occurrence of a short circuit between electrodes due to overflowing solder.

### (Example 1)

As illustrated in FIG. 3, by using a piezoelectric body raw material, a curved-surface oscillator with a curvature radius of 30 R, a width (length in curvature direction) of 30 mm, a depth of 2 mm, a thickness of 0.4 mm, and a frequency constant of 2000 Hzm is disposed in a manner to have the curvature of 30 R in a direction where its ultrasonic emission direction (viewing angle) is desired to be broadened. Silver-baked electrodes are formed on upper and lower surfaces of the curved-surface oscillator, by baking a paste in which silver particles and glass particles are dispersed in an organic solvent by high-temperature baking. The negative side electrode on the upper surface is connected to a diagnosis device via a lead wire and the positive side electrode on the lower surface is connected to the diagnosis device via a side electrode formed by metalizing a side surface of a backing material with nickel, gold, or the like and a lead wire connected to the side electrode. A backing material which suppresses residual vibration of the oscillator is joined to a back surface (surface opposite to a surface emitting an ultrasonic wave) of the oscillator with a joining material such as an adhesive agent or solder. In Example 1, the backing material constituted by a compound sintered body of aluminum oxide and zirconium oxide was joined under a vacuum atmosphere of 400□ in heat treatment temperature by using high-temperature solder whose melting point is 295□.

In the aforementioned Comparative Example 1, the curvature of the backing material is set to the same as that of the curved-surface oscillator to form the thin and uniform joining layer. In contrast, in Example 1, a width of the backing material is set to 30 mm, the same as that of the oscillator, and a curvature Rb of the backing material is set to 28.8 R so that, in relation to a curvature Rp (= 30 R) of the oscillator, a relation of Rb/Rp < 1, concretely, Rb = 0.96 × Rp, may be satisfied. Thereby, a thickness of the solder joining layer between the curved-surface oscillator and the backing material is 20 µm in a center part while thicknesses in both end parts are 100 µm, that is, the thicknesses of the end parts are formed to be larger than that of the center part. The curved-surface oscillator has a negative thermal expansion coefficient in a temperature range equal to or lower than its Curie temperature, and the backing material has a positive thermal expansion coefficient. Further, since the solder of the joining material is metal, it exhibits a thermal expansion coefficient higher than that of the backing material. When those members with quite different thermal expansion coefficients are joined at a high temperature and the temperature is brought back to a room temperature, a large residual stress occurs in the joining layer or each member due to heat aberration thereof. In Comparative Example 1, the residual stress was not overcome, and cracking occurred in the curved-surface oscillator to induce the decrease in yield.

In Example 1, regarding the curved-surface oscillator end part, on which a stress concentrates in particular to often cause breakage, the end parts of the joining layer were set to be thicker in relation to the center part, whereby the comparatively soft solder joining layer functioned as a stress relaxation layer, so that cracking of the end part of the curved-surface oscillator was able to be suppressed. Further, it was confirmed that a side lobe of the curved-surface oscillator was suppressed. In a case where the curvature Rb of the backing material exceeds 5% in relation to the curvature Rp of the curved-surface oscillator, for example, when the probe is fabricated with Rb = 27.0 R derived from Rb = 0.90 Rp, solder layer thicknesses of both end parts of the joining layer exceed 500 µm and thick parts of the joining layer increase, which may lead to a high probability of bubbles mixing into the joining layer. Mixing of the bubbles causes a decrease in dumping effect which is a primary object of the backing material, and further, multiple reflections by bubbles also occur. Those failures may decrease S/N as an ultrasonic probe, causing an image to become unclear.

### (Example 2)

As illustrated in FIG. 4, in Example 2, similarly to in Example 1, a curved-surface oscillator with a curvature of 30 R, a width (length in curvature direction) of 30 mm, a depth of 2 mm, a thickness of 0.4 mm, and a frequency constant of 2000 Hzm is disposed to have the curvature of 30 R in a direction where its ultrasonic emission direction (viewing angle) is desired to be broadened. Silver-baked electrodes are formed on upper and lower surfaces of the curved-surface oscillator. In Example 1, a backing material constituted by a compound sintered body of aluminum oxide and zirconium oxide was joined under a vacuum atmosphere of 400□ in heat treatment temperature by using high-temperature solder whose melting point is 315□.

In Example 2, a curvature Rb of the backing material was set to the same as a curvature Rp of the oscillator (Rb = 30 R), and a width (direction of curvature) of a joining surface with the oscillator was made smaller within a range of 10 % of the width (30 mm) of the oscillator. Concretely, the width of the backing material was set to 28 mm and both ends were each made smaller by 1 mm in relation to the oscillator. Thereby, a thickness of a solder joining layer between the curved-surface oscillator and the backing material is 20 µm, almost uniformly from a center part to a neighborhood of both end parts, and the solder layer of a thickness of about 300 µm is formed in both end parts with solder overflowing from the joining surface. By the above structure, the solder layer directly below, viewed from the oscillator, was as thin as 20 µm in the center part and as thick as 300 µm in both end parts.

In Example 2, regarding the curved-surface oscillator end part, on which a stress concentrates in particular to often cause breakage, the end parts of the joining layer were set to be thicker in relation to the center part, whereby the comparatively soft solder joining layer functioned as a stress relaxation layer, so that cracking of the end part of the curved-surface oscillator was able to be suppressed. It was confirmed that a side lobe of the curved-surface oscillator was suppressed. Further, in Example 2, there was also an effect of suppressing a short circuit between the positive and negative electrodes of the oscillator. In Comparative Example 1, the solder overflowing from the joining surface at the time of solder joining ran and approached the upper surface (negative electrode side) of the oscillator to thereby cause a short circuit. In Example 2, since the width of the backing material is made smaller by 1 mm in each end part thereof than that of the oscillator, the solder overflowing from the joining surface at the time of the heat treatment preferentially flowed down toward a side electrode of the backing material, which suppressed running upward to the negative electrode side on the oscillator upper surface. Therefore, a short circuit between the electrodes due to solder overflow, which occurred in Comparative Example 1, was suppressed. This effect was exhibited in Example 1 or also in later-described Example 3, but was prominent in Example 2.

### (Example 3)

As illustrated in FIG. 5, in Example 3, similarly to in Example 1, a curved-surface oscillator with a curvature of 30 R, a width (length in curvature direction) of 30 mm, a depth of 2 mm, a thickness of 0.4 mm, and a frequency constant of 2000 Hzm is disposed to have the curvature of 30 R in a direction where its ultrasonic emission direction (viewing angle) is desired to be broadened. Silver-baked electrodes are formed on upper and lower surfaces of the curved-surface oscillator. In Example 3 also, a backing material constituted by a compound sintered body of aluminum oxide, magnesium oxide, and titanium oxide was joined under a vacuum atmosphere of 400□ in heat treatment temperature by using high-temperature solder whose melting point is 295□.

In Example 3, a curvature Rb of the backing material was set to the same as the curvature Rp of the oscillator (Rb = 30 R), and the backing material was made smaller by chamfering end parts of a joining surface with the oscillator within a range of 10 % of a width (in this case, 30 mm) of the joining surface with the oscillator. Thereby, a thickness of a solder joining layer between the curved-surface oscillator and the backing material is 20 µm in a center part while thicknesses in both end parts are 200 µm, that is, the thicknesses of the end parts are formed to be larger than that of the center part.

In Example 3, regarding the curved-surface oscillator end part, on which a stress concentrates in particular to often cause breakage, the end parts of the joining layer were set to be thicker in relation to the center part, whereby the comparatively soft solder joining layer functioned as a stress relaxation layer, so that cracking of the end part of the curved-surface oscillator was able to be suppressed. Further, in Example 3, an effect of suppressing a side lobe was recognized. Regarding ultrasonic waves emitted from an ultrasonic oscillator, other than the ultrasonic wave emitted to a front of the oscillator, a wave called a side lobe is emitted at an angle of almost 45 degrees in relation to an ultrasonic wave emitting surface from both end parts of the oscillator, typically in accordance with an aperture or a frequency of the ultrasonic oscillator. This side lobe becomes noise to be a hindrance at a time of imaging. Thus, in Example 3, by making the joining layer thick by chamfering the backing material in both side parts of a curved surface, a heavy solder layer was disposed in a manner to be thicker in both side parts of the oscillator. Thereby, damping of the oscillator in both end parts strongly emerges, whereby intensities of the ultrasonic waves emitted from both side parts of the oscillator were suppressed. The intensity of the side lobe emitted as a byproduct decreased, and consequently, clearness of an image was able to be maintained. This effect was exhibited also in the probes of Example 1 and Example 2, but was prominent in Example 3.

On the other hand, when chamfered portions in both ends of the backing material exceed 10% of a width of the backing material, for example when 18% of the width was chamfered, a thick solder layer brings about a damping effect or an effect of suppressing breakage of an oscillator, but mixing of bubbles in an excessively thick joining layer also increases, leading to a decrease in dumping effect which is a primary object of the backing material, and further, leading to occurrence of multiple reflections due to bubbles. Those failures may decrease S/N as an ultrasonic probe, causing an image to become unclear.

In the above-described Examples, examples of the curved-surface oscillator type ultrasonic probe were shown, and curving with a uniform curvature was performed on the oscillator in order to broaden the viewing field of the ultrasonic probe, but the design of the oscillator in order to broaden the viewing field is not limited to the above. In a structure in which three flat-plate oscillators are arranged in different angles as in a triple mirror or in another structure, changing a shape of a backing material to suit the oscillator enables achievement of the effects described above.

The above-described arrangements have been presented by way of examples only, and are not intended to limit the scope of the invention. Those novel arrangements can be implemented in a variety of other forms, and various omissions, substitutions and changes may be made without departing from the spirit of the invention. Those arrangements and modifications thereof fall within the range and basic gist of the invention and fall within the range of the invention described in what is claimed is and its equivalent.

### (Numbered Clauses relating to the arrangements)

1. An ultrasonic probe comprising:
   a curved-surface oscillator having a curved first surface which transmits/receives an ultrasonic wave and a curved second surface positioned on a side opposite to the first surface;
   a backing material having a curved third surface; and
   a joining layer intervened between the second surface of the curved-surface oscillator and the third surface of the backing material so as to join the curved-surface oscillator and the backing material, wherein
   the joining layer has a shape in which a first thickness in a normal direction of the third surface in an end part of the curved-surface oscillator is larger than a second thickness in a normal direction of the third surface in a center part of the curved-surface oscillator.
2. The ultrasonic probe according to clause 1, wherein
   a curvature radius of the third surface of the backing material is smaller than a curvature radius of the second surface of the curved-surface oscillator.
3. The ultrasonic probe according to clause 2, wherein
   when the curvature radius of the third surface of the backing material is denoted by Rb and the curvature radius of the second surface of the curved-surface oscillator is denoted by Rp, the curvature radius Rb satisfies 0.95 ≤ Rp ≤ 0.98.
4. The ultrasonic probe according to any one of clause 1 to clause 3, wherein
   a width in a first direction of a tangential direction of the third surface in a center part of the backing material is smaller than a width in the first direction of the second surface of the curved-surface oscillator.
5. The ultrasonic probe according to clause 4, wherein
   when the width of the third surface of the backing material is denoted by Wb and the width of the second surface of the curved-surface oscillator is denoted by Wp, the width Wb satisfies 0.90 ≤ Wp ≤ 0.98.
6. The ultrasonic probe according to any one of clause 1 to clause 5, wherein
   the backing material has a chamfered surface in the end part in the first direction of the tangential direction of the third surface.
7. The ultrasonic probe according to clause 6, wherein
   when a width of the third surface after chamfering of the backing material is denoted by Wbc and the width of the second surface of the curved-surface oscillator is denoted by Wp, the width Wbc satisfies 0.90 ≤ Wp ≤ 0.98.
8. An ultrasonic inspection device comprising:
   the ultrasonic probe according to any one of clause 1 to clause 7; and
   a control unit including a driving part driving the ultrasonic probe, a control part controlling an operation of the driving part, and a signal processing part processing a reflected wave signal of the ultrasonic wave.

## Claims

1. An ultrasonic probe (5) comprising:
a curved-surface oscillator (2) having a curved first surface (2a) which transmits/receives an ultrasonic wave and a curved second surface (2b) positioned on a side opposite to the first surface;
a backing material (3) having a curved third surface (3a); and
a joining layer (4) intervened between the second surface of the curved-surface oscillator (2b) and the third surface (3a) of the backing material (3)vso as to join the curved-surface oscillator and the backing material, wherein
the joining layer (4) has a shape in which a first thickness in a normal direction of the third surface in an end part of the curved-surface oscillator is larger than a second thickness in a normal direction of the third surface in a center part of the curved-surface oscillator.

2. The ultrasonic probe according to claim 1, wherein
a curvature radius of the third surface of the backing material is smaller than a curvature radius of the second surface of the curved-surface oscillator.

3. The ultrasonic probe according to claim 2, wherein
when the curvature radius of the third surface of the backing material is denoted by Rb and the curvature radius of the second surface of the curved-surface oscillator is denoted by Rp, the curvature radius Rb satisfies 0.95 ≤ Rp ≤ 0.98.

4. The ultrasonic probe according to any one of claim 1 to claim 3, wherein
a width in a first direction of a tangential direction of the third surface in a center part of the backing material is smaller than a width in the first direction of the second surface of the curved-surface oscillator.

5. The ultrasonic probe according to claim 4, wherein
when the width of the third surface of the backing material is denoted by Wb and the width of the second surface of the curved-surface oscillator is denoted by Wp, the width Wb satisfies 0.90 ≤ Wp ≤ 0.98.

6. The ultrasonic probe according to any one of claim 1 to claim 5, wherein
the backing material has a chamfered surface (13) in the end part in the first direction of the tangential direction of the third surface.

7. The ultrasonic probe according to claim 6, wherein
when a width of the third surface after chamfering of the backing material is denoted by Wbc and the width of the second surface of the curved-surface oscillator is denoted by Wp, the width Wbc satisfies 0.90 ≤ Wp ≤ 0.98.

8. An ultrasonic inspection device (1) comprising:
the ultrasonic probe (5) according to any one of claim 1 to claim 7; and
a control unit (6) including a driving part driving the ultrasonic probe, a control part controlling an operation of the driving part, and a signal processing part processing a reflected wave signal of the ultrasonic wave.
